# FASCICULE DE BREVET EUROPEEN

(11) **EP 0 341 285 B1**
(45) Date de publication et mention de la délivrance du brevet: **23.06.1993**
(21) Numéro de dépôt: 88910062.4
(22) Date de dépôt: 17.11.1988
(51) Int. Cl.: F16J 9/06, F16J 9/08

(54) **METHODE DESTINEE A AMELIORER LE GLISSEMENT DES PISTONS ALTERNATIFS DES MOTEURS THERMIQUES ET DISPOSITIF POUR SA MISE EN OEUVRE**
VERFAHREN ZUR VERBESSERUNG DER REIBUNG EINES KOLBENS EINER BRENNKRAFTMASCHINE UND VORRICHTUNG ZUR AUSFÜHRUNG DES VERFAHRENS
PROCESS AND DEVICE IMPROVING THE SLIDING OF ALTERNATING PISTONS OF THERMAL ENGINES

(30) Priorité: 18.11.1987 FR 8715956
(43) Date de publication de la demande: 15.11.1989
(73) Titulaire: RANNOU, Georges, F-94400 Vitry (FR)
(72) Inventeur: RANNOU, Georges, F-94400 Vitry (FR); PROMEYRAT, Maurice, F-93270 Sevran (FR)
(74) Mandataire: Tanguy, Gilbert André
(86) Numéro de dépôt international: FR8800564
(87) Numéro de publication internationale: WO8904932

(56) Documents cités:
- FR-A- 1 239 823
- US-A- 2 666 678

## Description

La présente invention concerne une méthode destinée à conférer un meilleur glissement aux pistons alternatifs des moteurs thermiques pendant le temps d'explosion, tout en réduisant sans danger durant le même temps, la tendance à osciller de la tête du piston alternatif. Elle vise également un dispositif pour la mise en oeuvre de cette méthode.

On sait que les pistons alternatifs des moteurs modernes sont en général de forme tronconique irrégulière, la tête présentant le plus faible diamètre tandis que le bas de la jupe présente le plus fort diamètre. Par ailleurs, lesdits pistons sont ovales, particulièrement au niveau de la jupe qui est également élastique, le jeu (à froid) de cette dernière avec le cylindrer, à environ 1 cm du bas, variant de quelques centièmes de millimètres, à son diamètre le plus fort dans le sens de balancement du piston, jusqu'à quelques dixièmes de millimètres, à son diamètre le plus faible, pris parallèlement à l'axe horizontal du piston. Il en résulte au cours de fonctionnement une contrainte de la jupe contre le cylindre du fait de sa dilatation plus grande que celle de ce dernier, ladite contrainte contribuant d'ailleurs essentiellement à la stabilité verticale du piston de façon à éviter que sa tête, qui est toujours légèrement en retrait du cylindre, afin d'éviter tout grippage, ne vienne heurter ledit cylindre alternativement et perpendiculairement à l'axe précité avec un risque de détérioration pour ladite tête et ledit cylindre. Cette contrainte change avec les oscillations de la bielle mais elle est surtout modifiée pendant le temps de l'explosion où la jupe de piston subit, surtout d'un coté sous son axe horizontal, une violente pression contre le cylindre qui freine considérablement le déplacement dudit piston. Certes, il est bien connu que les fluides moteurs, en s'accumulant à l'arrière du segment, surtout du "coup de feu", forment un joint torique qui, sous pression entre segment et fond de gorge de piston, contribue à éviter l'oscillation du piston autour de son axe horizontal déjà cité. Cependant, ce joint ne peut guère résister à ladite oscillation vue l'énorme pression que subit le piston pendant la combustion ; ledit joint torique se déforme alors en prenant l'aspect d'un joint gonflé d'un côté et aminci à l'opposé, et ceci plus amplement lorsque les fluides deviennent très gazeux au cours, notamment, des mises en température les plus élevées du moteur.

Comme autre inconvénient des pistons conventionnels, on notera que rien n'a été prévu pour empêcher les incrustations de calamine principalement sur les parois de fond de gorge du segment dit "coup de feu" et sur la périphérie intérieure de ces derniers. Cette calamine finira par forcer sur le segment pendant les plus fortes dilatations du piston nuisant au bon fonctionnement de ce dernier ainsi qu'au graissage de l'attaque du piston et du haut du cylindre, ce qui se traduira par un plus faible rendement du moteur et par un accroissement de son usure.

On connaît également l'existence de certains bruits naissant à différents régime et notamment pendant les fortes accélérations du moteur, ces bruits étant consécutifs aux oscillations précitées de la tête du piston, qui sont pratiquement inévitables dans les moteurs conventionnels. Pour remédier à tous ces inconvénients, on propose d'adjoindre au segment, notamment au segment dit "coup de feu", divers éléments additionnels appelés généralement "expandeurs ou extenseurs". Ces différents dispositifs ont pour but de remplacer ou d'augmenter l'effet de ressort du segment et viennent en aboutement excessif contre ce dernier, ce qui se traduit par une irrégularité de l'usure dudit segment, de la gorge du piston et de la paroi du cylindre. Par ailleurs, ces dispositifs sont trop statiques et deviennent de véritables et très rapides "accumulateurs" de calamine avec les conséquences que l'on connaît.

Parmi les expandeurs de l'art antérieur, on peut citer celui décrit dans le brevet US-A-2 666 678 et qui est plus spécialement adapté au nouveau piston autolubrifiant décrit dans ce brevet. Bien que cet expandeur puisse de par sa conception générer un gradient de pression pouvant éventuellement se traduire par la formation d'un cordon torique pressurisé permanent beaucoup moins déformable que le cordon habituel, il ne saurait de par sa constitution, être monté de façon correcte sur un piston de type classique. En outre, il est constitué de carbone de façon à favoriser la fonction d'autolubrification du piston qui est destiné à fonctionner à partir d'un gradient de pression atmosphérique. On notera également qu'une structure de trous traversant est ménagée sur les segments de façon à favoriser la ventilation et l'autolubrification. Dans FR-A- 1.239.823 est décrit un expandeur de type classique, qui agit par poussée externe sur le segment. Les joints toriques pressurisés obtenus à partir de ces deux expandeurs n'ont aucun caractère de permanence du fait qu'ils se déforment de façon à présenter l'aspect d'un joint gonflé d'un côté et aminci de l'autre du fait que les contraintes imposées par le piston ne sont pas suffisamment encaissées par les dispositifs expandeurs correspondants.

Un objet de la présente invention est d'obvier aux inconvénients exposés ci-dessus en fournissant une méthode permettant à la fois d'uniformiser les pressions du piston sur le cylindre au niveau de l'application des segments, en particulier du "coup de feu", tout en favorisant une plus grande élasticité de la jupe du piston.

Un autre objet de l'invention est de fournir une méthode permettant de supprimer les incrustations nuisibles de calamine tout en réduisant aussi les bruits précédemment incriminés.

La présente invention a donc pour objet une méthode destinée à améliorer le glissement axial des pistons alternatifs des moteurs thermiques, tout en s'opposant au mouvement de basculement desdits pistons, selon laquelle on génère par l'action de moyens élastiques vibratoires résistants aux contraintes thermiques et chimiques produites par l'explosion, et de l'infiltration habituelle des fluides moteurs dans la gorge d'un piston, ces moyens étant montés RADIALMENT derrière le segment dudit piston, un gradient de pression qui se traduit en fonctionnement du moteur par la formation d'un cordon torique de fluide pressurisé permanent situé radialement derrière lesdits moyens élastiques et limité par les faces de la gorge et les moyens élastiques, ces moyens élastiques présentant une hauteur qui est sensiblement la même que celle de la gorge du piston pour limiter le flux des fluides moteurs entre les faces radialement intérieures et extérieures des moyens élastiques.

L'invention vise également le dispositif élastique vibratoire nécessaire à la mise en oeuvre de la méthode précitée, ce dispositif étant constitué d'un piston avec au moins une gorge, un segment et au moins un anneau fendu en acier inoxydable, ondulé ou plié en accordéon présentant une élasticité telle qu'il ne vient en contact que par points avec la lèvre interne du segment derrière lequel il est monté, lèvre dont il est écarté de façon intermittente par le flux des fluides moteurs n'exerçant pas de pression sensible sur le segment sauf à la fin de la compression et pendant la combustion, cet anneau fendu présentant une hauteur qui est sensiblement la même que celle de la gorge pour limiter le flux de fluides moteurs entre les faces radialement intérieure et extérieure de l'anneau fendu.

Le fait que l'anneau est en acier inoxydable permet au cordon torique de résister en permanence aux contraintes mécaniques et thermiques sans se déformer. Il en résulte une réduction des oscillations du piston ce qui diminue dans une très large mesure les battements de ce dernier contre le cylindre, donc le bruit du moteur. L'énergie dissipée au moment de l'explosion par les oscillations est donc récupérée axialement dans le sens de poussée du piston ce qui se traduit par un gain de puissance du moteur. Ceci est dû aux caractéristiques de résistance mécanique, de résilience et de résistances aux agents chimiques et aux contraintes thermiques de l'acier inoxydable ayant les caractéristiques suivantes : qualité 18-8, résistance mécanique 220 à 240 kg/mm².

L'acier inoxydable s'oppose également aux accumulations trop importantes de calamine du fait de ses qualités de surface alors que les expandeurs de l'art antérieur étaient de véritables pièges à calamine. En outre, l'irrigation de l'huile vers le hauts de cylindre se trouve favorisée. Par ailleurs, l'effet de pont thermique caractéristique de l'expandeur, pour évacuer les calories du piston et du cylindre vers l'extérieur est assuré de façon permanente du fait de l'inaltérabilité de l'anneau en acier inoxydable de l'invention.

D'autres caractéristiques et avantages de l'invention ressortiront à la lecture de la description suivante d'une forme de réalisation d'anneau fendu selon l'invention, en référence aux dessins annexés dans lesquels :
Figure 1 est une vue en perspective de l'anneau fendu ondulé selon la présente invention ;
Figure 2 est une vue à plus grande échelle selon la ligne II-II de la Figure 3 d'un détail de l'anneau ondulé de la Figure 1 ; et
Figure 3 est une vue selon la ligne III-III de la Figure 2.

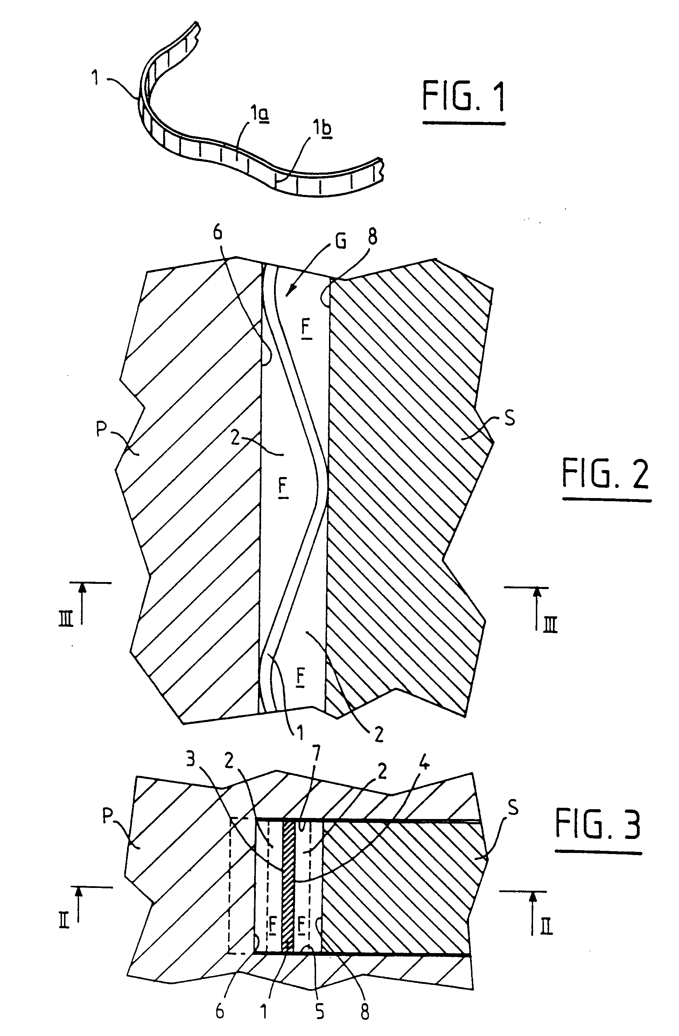

Sur la Figure 1 est représenté en perspective l'anneau fendu 1 selon la présente invention avec ses facettes 1a limitées par les lignes de pliage 1b et orientées selon le degré d'angularité conféré à l'anneau dans la zone de la facette. Sur la Figure 2 est représenté à plus grande échelle un détail représentant une fraction proportionnelle de l'anneau fendu 1 disposé entre la lèvre arrière 8 d'un segment S et le fond 6 de la gorge d'un piston. On voit que les surfaces 6 et 8 et l'anneau fendu 1 définissent un certain nombre de logements 2 qui retiennent chacun une partie des fluides moteurs F. Comme représenté sur la Figure 3, les fluides moteurs F sont donc bien compartimentés entre les faces 3 et 4 de l'anneau fendu et ondulé 1, les surfaces 5, 6 et 7 limitant la gorge G du piston P et la lèvre interne 8 du segment S.

Il est clair, à l'observation des figures du dessin annexé, que les fluides moteurs F, même à l'état gazeux, ne peuvent circuler dans le fond de la gorge G autrement que plus ou moins difficilement, c'est-à-dire ne passer que plus ou moins lentement d'un compartiment 2 à l'autre. Cette difficulté à circuler est la plus importante en fin de compression, le gradient de pression qui règne, à cet instant, en fond de gorge du segment, par exemple le segment "coup de feu", atteint d'ailleurs de manière générale son maximum à partir du couple maximal du moteur, qui grâce à l'agencement particulier de l'anneau 1 de l'invention apparaîtra à un régime plus bas, jusqu'à son rendement maximal, qui sera sensiblement augmenté grâce à l'agencement particulier d'anneaux fendus selon l'invention. On conçoit également que les modifications de pression dans le fond de la gorge G conjointement aux mouvements verticaux du piston P, qui est soumis constamment aux accélérations et décélérations ultra-rapides et alternatives, dues au fonctionnement du moteur et aux variations thermiques, entraînent des déplacements, des déformations momentanées et des vibrations de l'anneau 1, vibrations favorisées par la grande souplesse élastique de ces derniers à certains régimes et températures. Tous ces mouvements intermittents dudit anneau 1 contribuent essentiellement à protéger les parois de la gorge et la lèvre interne du segment des incrustations de calamine qui se produisent habituellement comme cela a été mentionné ci-dessus. Il convient également de noter que l'anneau de l'invention engendre aussi un silence inaccoutumé de fonctionnement étant donné qu'il permet l'atténuation des oscillations de la tête de piston. En outre, la présence de l'anneau de l'invention est un facteur complémentaire, par segment correspondant interposé, de refroidissement du fond de la gorge qu'il occupe.

Il se produit ainsi, grâce aux phénomènes vibratoire engendrés par l'élasticité de l'anneau et grâce à l'afflux d'un gradient de pression comme spécifié cidessus un nouvel anneau torique de pression relativement indéformable en fin de compression. Cet anneau torique de pression régularise l'appui circulaire du segment sur le cylindre, ce qui, principalement, ralenti l'usure de chacun. Par ailleurs, ce nouveau cordon pressurisé diminue de par son action la tendance à osciller de la tête du piston, en réduisant ses oscillations elles-mêmes, ce qui se traduit par une augmentation sensible du rendement du moteur.

L'anneau de l'invention se place généralement sans aucune modification à l'arrière du segment "coup de feu" et est avantageusement constitué par une lamelle en acier ressort, ou bien en inox, d'une largeur avoisinant celle du segment et d'une épaisseur de quelques centièmes de millimètres. Cet anneau est avantageusement ondulé ou plié en accordéon pour présenter une épaisseur hors tout sensiblement supérieure, à froid et sans contrainte, à la largeur du fond de la gorge où il est destiné à être posé. On remarquera également que ce très simple anneau peut être obtenu industriellement à un prix de revient relativement modique. Il est clair que, dès la mise en action du piston, du fait des contraintes thermiques et mécaniques, l'anneau pourra se déformer légèrement en vibrant, surtout lorsqu'il sera frappé par les fluides moteurs jaillissant vers le fond de la gorge du piston puis ledit anneau coopérera avec ces derniers pour créer le nouveau cordon torique pressurisé déjà cité. L'anneau, du fait de sa constitution en acier inoxydable, pourra avoir une épaisseur très faible de l'ordre de 1/10 à 2/10 mm, alors que l'épaisseur des expandeurs classiques atteignait au maximum 3/10 mm, tandis que sa hauteur sera fonction de la hauteur de la gorge de piston dans laquelle il doit être monté.

Les signes de référence insérés après les caractéristiques techniques mentionnées dans les revendications, ont pour seul but de faciliter la compréhension de ces dernières, et n'en limitent aucunement la portée.

## Revendications

1. Méthode destinée à améliorer le glissement axial des pistons (P) alternatifs des moteurs thermiques, tout en s'opposant au mouvement de basculement desdits pistons, selon laquelle on génère par l'action de moyens élastiques vibratoires (1) résistants aux contraintes thermiques et chimiques produites par l'explosion, et de l'infiltration habituelle des fluides moteurs (F) dans la gorge (G) d'un piston, ces moyens étant montés RADIALEMENT derrière le segment (S) dudit piston, un gradient de pression qui se traduit en fonctionnement du moteur par la formation d'un cordon torique de fluide pressurisé permanent, situé radialement derrière lesdits moyens élastiques (1) et limité par les faces de la gorge (G) et les moyens élastiques (1), ces moyens élastiques (1a, 1b) présentant une hauteur qui est sensiblement la même que celle de la gorge du piston pour limiter le flux des fluides moteurs entre les faces radialement intérieures et extérieures des moyens élastiques.

2. Dispositif élastique et vibratoire pour la mise en oeuvre de la méthode selon la revendication 1, ce dispositif étant constitué d'un piston (P) avec au moins une gorge (G), un segment (S) et au moins un anneau fendu (1) en acier inoxydable, ondulé ou plié en accordéon présentant une élasticité telle qu'il ne vient en contact que par points avec la lèvre interne (8) du segment (S) derrière lequel il est monté, lèvre dont il est écarté de façon intermittente par le flux des fluides moteurs (F) n'exerçant pas de pression sensible sur le segment sauf à la fin de la compression et pendant la combustion, cet anneau fendu présentant une hauteur qui est sensiblement la même que celle de la gorge (G) pour limiter le flux de fluides moteurs entre les faces radialement intérieure et extérieure de l'anneau fendu.

3. Dispositif élastique et vibratoire selon la revendication 2, caractérisé en ce qu'il comporte un certain nombre de facettes (1a) limitées par des lignes de pliage (1b).

## Claims

1. Process intended to cause the sliding of alternative pistons in ignition engines to be improved while eliminating at a large extent the tilting motion of said pistons, characterized in that due to the conjugated effect of vibratory resilient means withstanding the chemical and thermic stresses generated by the ignition stroke, and to the usual infiltration of driving fluids (F) into the piston groove (G), said means being radially mounted behind the relative piston sealing ring (S), a pressure gradient is generated during the motor operation, that results in a permanent toric pressurized gaseous ring which is radially located behind said resilient means and are limited by the sides of groove (G) and said resilient means, said resilient means (1a, 1b) having a height which is substantially the same as that of the piston groove on purpose to limit the driving fluid flux between the radially inner and outer faces of the resilient means.

2. Vibratory resilient device for embodying the process according to claim 1, said device comprising a piston (P) having at least a groove (G), a sealing ring (S) and at least a slit ring (1) made of stainless steel which is either undulated or multi-folded and has a resiliency so selected as to only come by locations in contact with the internal edge (8) of the sealing ring (S) behind which it has been mounted, said resilient ring being intermittently drawn aside from said edge by the flux of the driving fluids (F), while applying no substantial pressure on said sealing ring except at the end of the compression stroke and during the ignition, said slit ring having a height which is substantially the same as that of the groove (G) on purpose to limit the driving fluid flux between the radially inner and outer faces of the resilient means.

3. Vibratory resilient device according to claim 2, characterized in that it comprises a number of facets (1a) defined by folding lines (1b).

## Patentansprüche

1. Verfahren zur Verbesserung der Reibung eines Kolbens (P) einer Brandkraftmaschine, indem es der Kippbewegung der gennanten Kolben entgegenläuft, wodurch die Wirkung von dehnbaren und schwingenden Mitteln (1), die strahlig hinter dem Kolbenring (S) des besagten Kolbens angebracht sind, und die im thermischen und chemischen Zwang, der durch die Explosion hervergerufen wurde, und dem gewohnten Eindringen von Druckflüssigkeit (F) in die Rille (G) des Kolbens widerstehen, wodurch ein Druckgefälle erzeugt wird das im funktionieren der Maschine durch die Bildung einer torische Schnur, die aus einer dauernd unter Druck stehenden Flüssigkeit besteht, die strahlig hinter den genannten dehnbaren Mitteln (1) liegt, und von den Seiten der Rille (G) und dem dehnbaren Mitteln begrenzt wird, wobei diese dehnbaren Mittel eine Höhe darstellen, die sichtbar dieselbe ist wie die der Kolbenrille, um den Fluß der Druckflüssigkeit zwischen den strahlig inneren und äußeren Flächen zu begrenzen.

2. Dehnbare und schwingende Vorrichtung zum Einsatz des Verfahrens gemäß Anspruch 1, wobei diese Vorrichtung aus einem Kolben (P) mit wenigstens einer Rille (G) einem Kolbenring und wenigstens einer Rille (G) einem Kolbenring und wenigstens einem gespaltenen, rostfreien Stahlring besteht, gewellt oder gespaltet, der eine solche Dehnbarkeit darstellt, daß er nur ein vereinzelten Punkten mit dem internen Rand (8) des Kolbenrings (S) hinter dem er angebracht ist, in Berührung kommt von dem er intermittierend absteht durch Fluss der Druckflüssigkeit (F) der ohne wesentlichen Druck auf den Kolbenring auszuüben außer am Ende der Kompression und während der Verbrennung, wobei dieser gespaltene Stahlring eine Höhe darstellt, die dieselbe ist wie die der Rille (G), um den Fluss der Druckflüssigkeit zwischen den Strahlingen inneren und aüsseren Flächen des gespaltenen Stahlrings zu beschränken.

3. Dehnbare und Schwingende Vorrichtung gemäß Anspruch 2, dadurch gekennzeichnet, daß eine gewisse Anzahl von Facetten enthält (1a) die durch Falzlinien (1b) begrenzt werden.
